# EUROPEAN PATENT APPLICATION

(11) **EP 3 958 574 A1**
(43) Date of publication of application: **23.02.2022**
(21) Application number: 20191758.0
(22) Date of filing: 19.08.2020
(51) Int. Cl.: H04N 21/00, G06F 21/10, G06T 15/00

(54) **METHOD AND SYSTEM FOR RENDERING VIRTUAL ENVIRONMENT**

(71) Applicant: XRSpace CO., LTD., Taoyuan City 330 (TW)
(72) Inventor: HUANG, Min-Che, 231 New Taipei City (TW); WANG, Wei-Min, 241 New Taipei City (TW)
(74) Representative: Emde, Eric

(57) **Abstract**

A method and a system (1) for rendering virtual environment are provided. In the method, multiple digital contents are obtained. The digital contents are different contents in the same three-dimensional virtual environment. The digital contents in the three-dimensional virtual environment are rendered into multiple image frames, respectively, according to a position information of the digital contents. The position information includes the position of one the three-dimensional content relative to the others in the three-dimensional virtual environment. The image frames and the blended result of the image frames are image frames used to be displayed. Accordingly, a flexible way is provided for presenting different contents.

## Description

### TECHNICAL FIELD

The present disclosure generally relates to a virtual environment simulation, in particular, to a method and a system for rendering virtual environment.

### BACKGROUND

Technologies for simulating senses, perception, and/or environment, such as virtual reality (VR), augmented reality (AR), mixed reality (MR), and extended reality (XR), are popular nowadays. The aforementioned technologies can be applied in multiple fields, such as gaming, military training, healthcare, remote working, etc.

It should be noticed that there may be many digital contents such as avatars, media contents, and other virtual objects in a virtual environment. However, some contents may have the copyright or may be sensitive. These contents may be not able to be shared with others. For example, the video encrypted with digital right management (DRM) can be merely played on a display with permission. In conventional approaches, a three-dimensional scene, where the video encrypted with DRM is played therein, may be rendered directly into image frame encrypted with DRM, so that a blank frame may be displayed on a display without permission when the display tries to display the image frame encrypted with DRM. It may be not convenient for live broadcasting or content sharing.

### SUMMARY OF THE DISCLOSURE

Accordingly, the present disclosure is directed to a method and a system for rendering virtual environment, to separately rendering multiple contents in the virtual environment.

In one of the exemplary embodiments, a method for rendering virtual environment includes, but not limited to, the following steps. Multiple digital contents are obtained. These digital contents are different contents in the same three-dimensional virtual environment. The digital contents are rendered into multiple image frames, respectively, according to position information of the digital contents. The position information includes the position of one of the digital contents relative to the others in the three-dimensional virtual environment. The image frames and the blended result of the image frames are image frames frame used to be displayed.

In one of the exemplary embodiments, a system for rendering virtual environment includes, but not limited to, a host display, a memory, and a processor. The memory stores a program code. The processor is coupled to the host display and the memory and loads the program code to perform the following steps. The processor obtains multiple digital contents, respectively renders the digital contents into multiple image frames according to the position information of the digital contents. These digital contents are different contents in the same three-dimensional virtual environment. The position information includes the position of one three-dimensional content relative to the others in the three-dimensional virtual environment. The image frames and the blended result of the image frames are image frames used to be displayed on the host display.

In light of the foregoing, according to the method and the system for rendering the virtual environment provided in one or more embodiments, multiple digital contents of the one three-dimensional virtual environment would be rendered, separately. Accordingly, the rendered frames or the blended result may be displayed, separately, for different requirements.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A is a block diagram illustrating a system according to one of the exemplary embodiments of the disclosure.
FIG. 1B is a block diagram illustrating a software structure according to one of the exemplary embodiments of the disclosure.
FIG. 2 is a flowchart illustrating a method for rendering virtual environment according to one of the exemplary embodiments of the disclosure.
FIG. 3 is a schematic diagram illustrating an engine structure according to one of the exemplary embodiments of the disclosure.
FIG. 4 is a schematic diagram illustrating another engine structure according to one of the exemplary embodiments of the disclosure.
FIG. 5 is a flowchart illustrating a method for sharing content according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

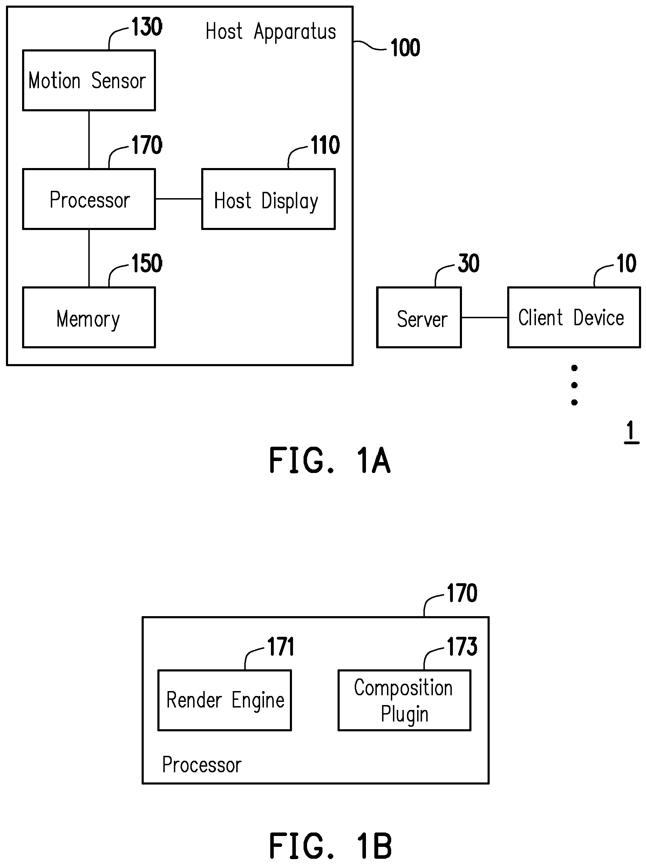

FIG. 1A is a block diagram illustrating a system 1 according to one of the exemplary embodiments of the disclosure. Referring to FIG. 1, the system 1 includes, but not limited to, one or more client devices 10, a server 30, and a host apparatus 100. The system 1 is adapted for VR, AR, MR, XR, or other reality simulation related technology.

The client devices 10 may be, but not limited to, a mobile phone, a screen, a television, a monitor, or other electronic devices which may have a liquid-crystal display (LCD), a light-emitting diode (LED) display, an organic light-emitting diode (OLED) display, or other displays. In some embodiments, the client devices 10 is used for processing multimedia data images, for example, images in an virtual environment, a video loaded from a clould, or a picture transmitted by the server 30.

The server 30 may be a cloud server, a streaming server, a personal computer, or the likes. In some embodiments, the server 30 is used for providing video stream, so that the video can be played on the client devices 10.

The host apparatus 100 includes, but not limited to, a host display 110, a motion sensor 130, a memory 150, and a processor 170. The host apparatus 100 could be, but not limited to, a head-mounted display (HMD) or a digital glasses which can adapt to VR, AR, MR, XR applications.

The host display 110 may be an LCD, a LED display, an OLED display, or other displays. In one embodiment, the host display 110 is used for displaying data for example, images, virtual environment images, a video, or pictures transmitted from the processor 170. In one embodiment, the host display 110 may be embedded in the main apparatus. In some embodiments, the host display 110 may be a display of an external apparatus (such as a smartphone, a tablet, or the likes), and the external apparatus can be placed on the main body of a HMD.

The motion sensor 130 may be an accelerometer, a gyroscope, a magnetometer, a laser sensor, an inertial measurement unit (IMU), an infrared ray (IR) sensor, an image sensor, a depth camera, or any combination of aforementioned sensors. In one embodiment, the motion sensor 130 is used for sensing the motion of the host apparatus 100 or the system 1, to generate motion sensing data from the sensing result of the motion sensor 130 (e.g. camera images, sensed strength values, etc.). For one example, the motion-sensing data comprises a 3-degree of freedom (3-DoF) data, and the 3-DoF data is related to the rotation data of the user's head in three-dimensional (3D) space, such as accelerations in yaw, roll, and pitch. For another example, the motion-sensing data comprises a 6-degree of freedom (6-DoF) data. Comparing with the 3-DoF data, the 6-DoF data is further related to the displacement of the user's head in three perpendicular axes, such as accelerations in surge, heave, and sway. For another example, the motion-sensing data comprises a relative position and/or displacement of the user's head in the 2D/3D space. In some embodiments, the motion sensor 130 could be embedded in a handheld controller or a wearable apparatus connected to the host apparatus 100, or could be embedded in the host apparatus 100.

The memory 150 may be any type of a fixed or movable random-access memory (RAM), a read-only memory (ROM), a flash memory, a similar device, or a combination of the above devices. The memory 150 records program codes, device configurations, buffer data, or permanent data (such as motion sensing data, three-dimensional contents, or image frames), and these data would be introduced later.

The processor 170 is coupled to the host display 110, the motion sensor 130, and the memory 150. The processor 170 is configured to load the program codes stored in the memory 150, to perform a procedure of the exemplary embodiment of the disclosure.

In some embodiments, the processor 170 may be a central processing unit (CPU), a microprocessor, a microcontroller, a graphics processing unit (GPU), a digital signal processing (DSP) chip, a field-programmable gate array (FPGA). The functions of the processor 170 may also be implemented by an independent electronic device or an integrated circuit (IC), and operations of the processor 170 may also be implemented by software.

FIG. 1B is a block diagram illustrating a software structure according to one of the exemplary embodiments of the disclosure. The processor 170 may load corresponding program codes and execute one or more render engines 171 and a composition plugin 173. The render engine 171 performs the three-dimensional rendering process which is the three-dimensional computer graphics process of converting three-dimensional models into two-dimensional images. In some embodiments, the two-dimensional images converted by the render engine 171 include position information in the three-dimensional virtual environment. The composition plugin 173 blends or combines two or more image frames outputted from the render engine 171.

In one embodiment, the host apparatus 100 includes the host display 110, the motion sensor 130, the memory 150, and the processor 170, and communicates with the server 30 or the client device 10 via line connection, wireless connection, or any kind of connection which can transmit data. In some embodiments, the processor 170 may not be disposed at the same apparatus with the host display 110 and the motion sensor 130. However, the apparatuses respectively equipped with the host display 110, the motion sensor 130, and the processor 170 may further include communication transceivers with compatible communication technology, such as Bluetooth, Wi-Fi, and IR wireless communications, or physical transmission line, to transmit or receive data with each other. For example, the host display 110 and the processor 170 may be disposed in the host apparatus 100 while the motion sensor 130 is disposed outside the host apparatus 100. For another example, the processor 170 may be disposed in a computing device while the host display 110 and the motion sensor 130 being disposed outside the computing device.

To better understand the operating process provided in one or more embodiments of the disclosure, several embodiments will be exemplified below to elaborate the operating process of the system 1. The devices and modules in the system 1 are applied in the following embodiments to explain the method for rendering a virtual environment provided herein. Each step of the method can be adjusted according to actual implementation situations and should not be limited to what is described herein.

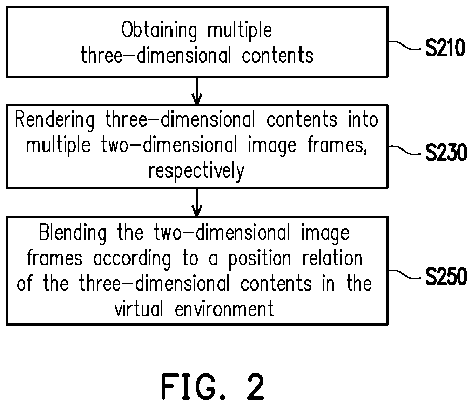

FIG. 2 is a flowchart illustrating a method for rendering virtual environment according to one of the exemplary embodiments of the disclosure. Referring to FIG. 2, the processor 170 may obtain multiple digital contents (step S210). Specifically, the digital content may be a real or virtual three-dimensional scene, an avatar, a video, a picture, or other virtual objects in a three-dimensional virtual environment. The video or picture file may be decoded by a decoder to generate corresponding surface textures in the three-dimensional virtual environment. The three-dimensional virtual environment may be a game environment, a virtual social environment, or a virtual conference. In one embodiment, the digital contents include a first content without access control protection and a second content with the access control protection. The access control protection is related to the access control of the digital contents such as digital right management (DRM) or other copyright-related management technologies. The access control of the digital contents may relate to age classification, member level classification, administrative classification, or any other kinds of access control managments. In some embodiments, the second content with the access control protection could be presented on the host display 110 but not on the client device 10. For example, a blank or all-black frame would be presented on the client device 10 if the second content is not authorized to be displayed on the client device 10. In one embodiment, the first content is a three-dimensional scene, and the second content is a video with the access control protection. In some embodiments, the first content and the second content may be any object or three-dimensional model in the same three-dimensional virtual environment.

The processor 170 may render the digital contents into multiple image frames, respectively (S230). Specifically, in order to present the three-dimensional virtual environment on the client device 10 or the host display 110, the processor 170 may perform the three-dimensional rendering process. The three-dimensional rendering process is the three-dimensional computer graphics process of converting three-dimensional models into two-dimensional images. The three-dimensional rendering process may include, for example, application stage, geometry processing stage, and rasterization stage. In the application stage, changes are made to the scene as required, for example, by user interaction through the means of input devices or during an animation. In the geometry processing stage, operations with polygons and their vertices may be performed. The geometry processing stage, for example, vertex shading, projection, clipping, and screen mapping. In the rasterization stage, discrete fragments, which are grid points, are created from continuous primitives outputted from the geometry processing stage.

In one embodiment, the processor 170 may generate the image frames according to the motion sensing data of the host apparatus 100 or the system 1 obtained from the motion sensor 130. In the geometry processing stage, a viewer, which respresents the user, in the three-dimensional virtual environment would be defined. The processor 170 uses the motion sensing data of the host apparatus 100 to determine the position and the direction of view of the viewer from which the scene is to be rendered. For example, if the user's head moves or rotates, the three-dimensional scene of the view may vary, and the image frames outputted from the rendering process also vary with the movement or the rotation of the host apparatus 100 or the system 1.

In one embodiment, one or more three-dimensional render engines would be provided by the processor 170 to render the digital contents. In some embodiments, a master three-dimensional render engine and one or more slave three-dimensional render engines are provided. The master three-dimensional render engine is used to render the first content without the access control protection, and the slave three-dimensional render engine is used to render the second content with the access control protection. For example, the master three-dimensional render engine renders a three-dimensional scene into image frames, and the slave three-dimensional render engine renders a video with the access control protection into image frames.

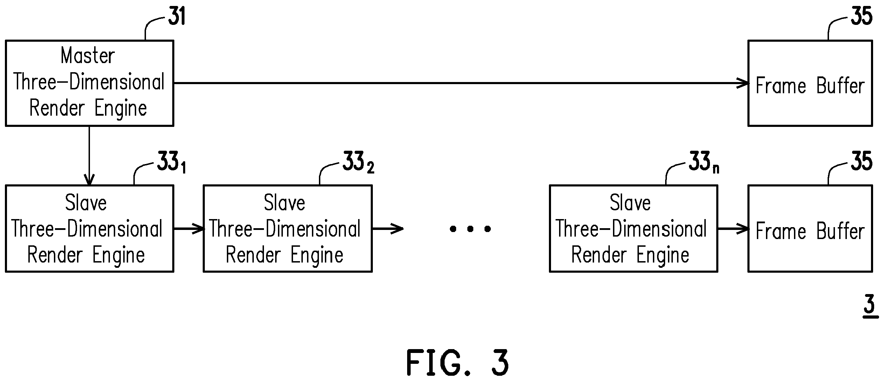

FIG. 3 is a schematic diagram illustrating an engine structure 3 according to one of the exemplary embodiments of the disclosure. Referring to FIG. 3, the engine structure 3 includes a master three-dimensional render engine 31, one or more slave three-dimensional render engine 33₁∼33ₙ, and multiple frame buffer 35, where n is a positive number and the amount of the slave three-dimensional render engine 33₁∼33ₙ. If the second content with the access control protection does not exist in the three-dimensional virtual environment, the master three-dimensional render engine 31 may merely render the first content without the access control protection into the image frames, and the outputted image frames are stored on the frame buffers 35. If the second content with the access control protection exists in the three-dimensional virtual environment, the master three-dimensional render engine 31 may transmit the second content to the slave three-dimensional render engine 33₁. The master three-dimensional render engine 31 and multiple slave three-dimensional render engine 33₁∼33ₙ may render the digital contents, respectively. In some embodiments, different three-dimensional render engines 33₁∼33ₙ may be configured to render digital contents with different formats, different protection protocols, or different resolutions. Based on their performances and functions of the three-dimensional render engine 33₁∼33ₙ, one or more second contents would be transmitted to a corresponding three-dimensional render engine in order so that each of the three-dimensional render engine 33₁∼33ₙ renders the corresponding second contents depending on the performances or functions of the three-dimensional render engine 33₁∼33ₙ. That is, a second content may be transmitted from the three-dimensional render engine 33₁ to the three-dimensional render engine 33₂. Then, the last the three-dimensional render engine 33ₙ outputs image frames of all second contents to the frame buffer 35.

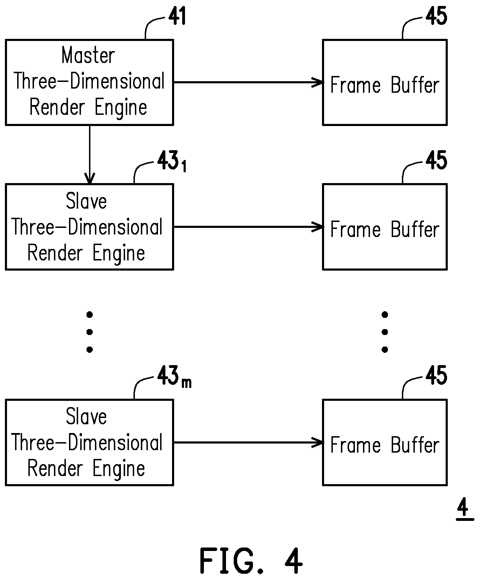

FIG. 4 is a schematic diagram illustrating another engine structure 4 according to one of the exemplary embodiments of the disclosure. Referring to FIG. 4, the engine structure 4 includes a master three-dimensional render engine 41, multiple slave three-dimensional render engine 43₁∼43ₙ, and multiple frame buffers 45, where m is a positive number and the amount of the slave three-dimensional render engine 43₁∼43ₘ. The difference between the engine structures 3 and 4 is each slave three-dimensional render engine 43₁∼43ₘ output image frames to its corresponding frame buffers 45.

In one embodiment, the image frames corresponding to different digital contents outputted by the frame buffer 45 may be displayed on the client device 10 or the host display 110. The processor 170 may upload the image frames to the server 30, so as to provide video streaming on the client device 10. For the HMD, the processor 170 may further generate image frames for two eyes of the user, respectively, and warp the image frames for two eyes.

Because multiple digital contents in the same three-dimensional virtual environment are rendered separately, the processor 170 can determine the image frames for a specific digital content to be shared to or displayed on a specific display. In some embodiments, the processor 170 may determine whether to separately render multiple digital contents based on the type of digital content, content sharing requirement, or other design requirements. For example, if the type of one digital content is encrypted with DRM, the processor 170 may determine to separately render multiple digital contents in the same three-dimensional virtual environment. For another example, if one digital content is requested to be shared with the client device 10, the processor 170 may determine to separately render multiple digital contents in the same three-dimensional virtual environment. However, the processor 170 still can consider multiple digital contents in the same three-dimensional virtual environment as one content and render all digital contents together into image frames.

In addition to separately presenting the image frames corresponding to multiple digital contents, the processor 170 may blend the image frames respectively corresponding to multiple digital contents according to position informations of the digital contents in the three-dimensional virtual environment (step S250). Specifically, the position informations includes absolute positions of the digital contents or relative positions of the digital contents relative to the others in the three-dimensional virtual environment. In the projection of the geometry processing stage, multiple three-dimensional objects would be projected to a two-dimensional plane. The depth information, included in the position informations of the digital contents, of these three-dimensional objects relative to the viewer in the three-dimensional virtual environment, would be needed for the projection. If two digital contents are overlapped in the image frames, the processor 170 may, through the composition plugin 173, use the depth information of these digital contents to determine which part of the digital contents should be presented on the image frames. If the digital contents are not overlapped in the image frames, the processor 170 may, through the composition plugin 173, directly combine the image frames corresponding to all digital contents based on the left-right relation, included in the position informations of the digital contents, of these digital contents relative to the viewer. In some embodiments, mesh, shaders, transform, and other required data for rendering the digital contents may be used for the combination of the image frames corresponding to multiple digital contents. Similarly, the blended result of the image frames corresponding to multiple digital contents may be displayed on the client device 10 and/or the host display 110. In addition, he processor 170 may further generate image frames of the blended result for two eyes of the user, respectively, and warp the image frames for two eyes.

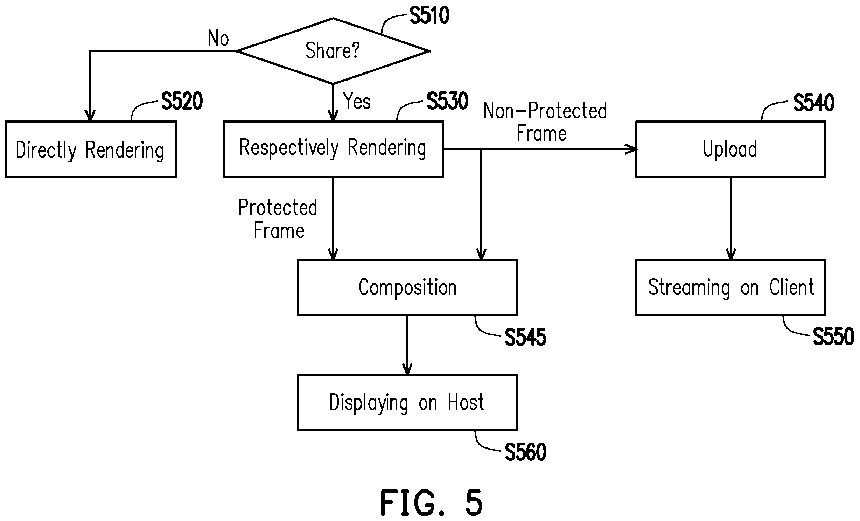

In the following, a scenario for sharing digital content would be introduced. FIG. 5 is a flowchart illustrating a method for sharing content according to one of the exemplary embodiments of the disclosure. Referring to FIG. 5, the processor 170 determines whether to share the digital contents to the client device 10 (step S510). For example, a presentation or a live broadcasting requirement would need to share the digital contents. In addition, the digital contents include the first content without the access control protection and the second content with the access control protection. If the digital contents are not shared, the processor 170 may consider all digital contents as one contents and directly render all digital contents into image frames without blending process of step S250 (step S520), and the rendered result can be displayed on the host display 130 (step S560). It is assumed a youtuber holds on the host display 130, and other clients watch on the client devices 10. In some embodiments, if the second content with the access control protection does not exist, the processor 170 may also merely render the first content into the image frames used to be displayed on the host display 130 without blending the image frames.

On the other hand, if the digital contents are planed to be shared, the processor 170 may respectively render the first and second contents (step S530), so as to generate a first frame of the image frames corresponding to the first content without the access control protection (i.e., the non-protected frame) and a second frame of the image frames corresponding to the second content with the access control protection (i.e., the protected frame). The processor 170 may transmit the first frame of the image frames corresponding to the first content without the access control protection (i.e., the non-protected frame) to the client devices 10 without transmitting the second frame of the image frames corresponding to the second content with the access control protection. In this embodiment, the non-protected frame corresponding to the first content would be uploaded to the server 30 (step S540), then the non-protected frame can be presented on the client devices 10 by streaming (step S550). On the other hand, the processor 150 may blend the image frames corresponding to the first and second contents as step S250 trouugh the composition plugin 173 (step S545). Then, the blended result of the non-protected frame and the protected frame can be displayed on the host display 130 (step S560).

In summary, the exemplary embodiments described above depicted method and system for rendering a virtual environment. Multiple digital contents in the same virtual environment can be rendered, separately. In addition, the image frame corresponding to multiple digital contents can be combined based on the position information of the digital contents in the virtual environment. Accordingly, the rendered result of different digital contents can be presented on different displays. If there is one digital content that has the protection of the access control, other digital content without the protection can be shared with other displays.

## Claims

1. A method for rendering virtual environment, **characterized by** comprising:
obtaining a plurality of digital contents, wherein the digital contents are different contents in a same three-dimensional virtual environment; and
rendering the digital contents in the three-dimensional virtual environment into a plurality of image frames, respectively, according to position information of the digital contents, wherein the position information comprises a position of one of the digital contents relative to the others in the three-dimensional virtual environment, and the image frames and a blended result of the image frames are used to be displayed.

2. A system (1) for rendering virtual environment, **characterized by** comprising:
a host display (110);
a memory (150), storing a program code; and
a processor (170), coupled to the host display (110) and the memory (150), and loading the program code to perform:
obtaining a plurality of digital contents, wherein the digital contents are different contents in a same three-dimensional virtual environment; and
rendering the digital contents in the three-dimensional virtual environment into a plurality of image frames, respectively, according to position information of the digital contents, wherein the position information comprises a position of one of the digital contents relative to the others in the three-dimensional virtual environment, and the image frames and a blended result of the image frames are used to be displayed on the host display (110).

3. The method for rendering virtual environment according to claim 1 or the system (1) for rendering virtual environment according to claim 2, **characterized in that** the digital contents comprise a first content without access control protection and a second content with the access control protection.

4. The method for rendering virtual environment according to claim 3, **characterized in that** the step of rendering the digital contents into the image frames comprises:
in response to the second content with the access control protection existing, rendering the digital contents into the image frames, respectively; and
blending the image frames according to the position information of the digital contents in the three-dimensional virtual environment after the step of rendering the digital contents into the image frames, or the system (1) for rendering virtual environment according to claim 3, **characterized in that** the processor (170) further performs:
in response to the second content with the access control protection existing, rendering the digital contents into the image frames, respectively; and
blending the image frames according to the position information of the digital contents in the three-dimensional virtual environment after the step of rendering the digital contents into the image frames.

5. The method for rendering virtual environment according to claim 3, **characterized in that** the step of rendering the digital contents into the image frames comprises:
in response to the second content with the access control protection not existing, merely rendering the first content into the image frames used to be displayed without blending the image frames, or the system (1) for rendering virtual environment according to claim 3, **characterized in that** the processor (170) further performs:
in response to the second content with the access control protection not existing, merely rendering the first content into the image frames used to be displayed on the host display (110) without blending the image frames.

6. The method for rendering virtual environment according to claim 4, **characterized in that** after the step of rendering the digital contents into the image frames, the method further comprises:
transmitting a first frame of the image frames without transmitting a second frame of the image frames, wherein the first frame corresponds to the first content without the access control protection, and the second frame corresponds to the second content with the access control protection, or the system (1) for rendering virtual environment according to claim 4, further comprising:
a client device (10), **characterized in that** the processor (170) further performs:
transmitting a first frame of the image frames to the client device (10) without transmitting a second frame of the image frames, wherein the first frame corresponds to the first content without the access control protection, and the second frame corresponds to the second content with the access control protection.

7. The method for rendering virtual environment according to claim 4, **characterized in that** the step of rendering the digital contents into the image frames comprises:
providing a master three-dimensional render engine (31, 41) and at least one slave three-dimensional render engine (33₁∼33ₙ, 43₁∼43ₘ), wherein the master three-dimensional render engine (31, 41) is used to render the first content without the access control protection, and the at least one slave three-dimensional render engine (33₁∼33ₙ, 43₁∼43ₘ) is used to render the second content with the access control protection, or the system (1) for rendering virtual environment according to claim 4, **characterized in that** the processor (170) further performs:
providing a master three-dimensional render engine (31, 41) and at least one slave three-dimensional render engine (33₁∼33ₙ, 43₁∼43ₘ), wherein the master three-dimensional render engine (31, 41) is used to render the first content without the access control protection, and the at least one slave three-dimensional render engine (33₁∼33ₙ, 43₁∼43ₘ) is used to render the second content with the access control protection.

8. The method for rendering virtual environment according to claim 7, **characterized by** further comprising:
transmitting, by the master three-dimensional render engine (31, 41), the second content with the access control protection to the at least one slave three-dimensional render engine (33₁∼33ₙ, 43₁∼43ₘ); and
blending the image frames outputted from the master three-dimensional render engine (31, 41) and the at least one slave three-dimensional render engine (33₁∼33ₙ, 43₁∼43ₘ), or the system (1) for rendering virtual environment according to claim 7, **characterized in that** the processor (170) further performs:
transmitting, by the master three-dimensional render engine (31, 41), the second content with the access contol protection to the at least one slave three-dimensional render engine (33₁∼33ₙ, 43₁∼43ₘ); and
blending the image frames outputted from the master three-dimensional render engine (31, 41) and the at least one slave three-dimensional render engine (33₁∼33ₙ, 43₁∼43ₘ).

9. The method for rendering virtual environment according to claim 1, **characterized in that** the step of rendering the digital contents into the image frames comprises:
obtaining motion sensing data of a user's head; and
generating the image frames according to the motion sensing data of the user's head, or the system (1) for rendering virtual environment according to claim 2, further comprising:
a motion sensor (130), acted with a user's head, and obtaining motion sensing data of the user's head, **characterized in that** the processor (170) further performs:
generating the image frames according to the motion sensing data of the user's head.
